# EUROPEAN PATENT SPECIFICATION

(11) **EP 2 152 029 B1**
(45) Date of publication and mention of the grant of the patent: **30.05.2012**
(21) Application number: 08380242.1
(22) Date of filing: 04.08.2008
(51) Int. Cl.: H04W 4/06

(54) **Multicast service for border cells**
Multicast-Dienst für benachbarte Zellen
Service de multidiffusion pour le cellules voisines

(43) Date of publication of application: 10.02.2010
(73) Proprietor: Vodafone Group PLC, Newbury Berkshire RG14 2FN (GB); Vodafone España, S.A., 28108 Alcobendas (Madrid) (ES)
(72) Inventor: Exadaktylos, Kyriakos, 28108 Alcobendas (Madrid) (ES); Diaz, Maria, 28108 Alcobendas (Madrid) (ES); Frost, Tim, 28108 Alcobendas (Madrid) (ES); Di Viesti, Pasqueale, 28050 Madrid (ES)
(74) Representative: Keston, David Arthur

(56) References cited:
- WO-A-2004/102878
- DE-A1-102006 039 326
- US-A1- 2003 119 452
- CHINA MOBILE ET AL: "Option for Uplink Messaging in LTE MBMS" 3GPP TSG-RAN WG2 #60BIS, R2-080569, [Online] 14 January 2008 (2008-01-14), pages 1-5, XP002514912 Retrieved from the Internet: URL:http://www.3gpp.org/ftp/tsg_ran/WG2_RL 2/TSGR2_60bis/Docs/> [retrieved on 2009-02-11]
- 3GPP: "Technical Specification Group Services and System Aspects; multimedia Broadcast/Multicast Service (MBMS); Architecture and functional description" 3GPP TS23.246 V8.2.0, [Online] June 2008 (2008-06), pages 1-57, XP002514913 Retrieved from the Internet: URL:http://www.3gpp.org/ftp/Specs/archive/ 23_series/23.246/> [retrieved on 2009-02-11]
- NOKIA: "MBMS Agreements" 3GPP TSG-RAN WG2 #58, R2-071733, [Online] 7 May 2007 (2007-05-07), pages 1-2, XP002514914 Retrieved from the Internet: URL:http://www.3gpp.org/ftp/tsg_ran/WG2_RL 2/TSGR2_58/Documents/> [retrieved on 2009-02-11]
- IPWIRELESS ET AL: "MBMS TDD and FDD Physical Layer Improvements" 3GPP TSG-RAN WG2 #58, R2-071670, [Online] 7 May 2007 (2007-05-07), pages 1-9, XP002514915 Retrieved from the Internet: URL:http://www.3gpp.org/ftp/tsg_ran/WG2_RL 2/TSGR2_58/Documents/> [retrieved on 2009-02-11]
- ORANGE ET AL: "Inputs from operators on eMBMS deployment scenarios and Stage 2 issues" 3GPP TSG-RAN WG2 #60, R2-075232, [Online] 5 November 2007 (2007-11-05), pages 1-5, XP002514916 Retrieved from the Internet: URL:http://www.3gpp.org/ftp/tsg_ran/WG2_RL 2/TSGR2_60/Docs/> [retrieved on 2009-02-11]

## Description

### BACKGROUND OF THE INVENTION

### Technical field

The present invention relates to a method for providing a multicast service in a cellular network. The present invention furthermore relates to a cellular network for providing a multicast service and a mobile station for receiving data of the multicast service.

### Description of related art

The Universal Mobile Telecommunications System (UMTS) standard defines a feature called Multimedia Broadcast & Multicast Service (MBMS). This feature allows the cellular network to send data in a point-to-multipoint fashion over the air interface to subscribers in the same cell that are interested to receive the service. Sending data in a point-to-multipoint fashion ensures that users receiving the same service will receive the same data stream/channel, i.e. the channel is a point-to-multipoint (multicast) channel. This simultaneous reception by multiple subscribers means that the data does not have to be sent individually to each subscriber on a point-to-point channel. Hence data transfer does not need to be duplicated and radio resources are conserved. The point-to-multipoint channel needs to cover the whole cell area. For this reason, relatively high transmission power has to be used on the channel, which increases the interference to other channels of the network. Therefore, if there are few or no users in a cell, it may be better not to use the point-to-multipoint channel at all. With the introduction of MBMS into the 3GPP UMTS Release 6 specifications, both point-to-point (PTP) and point-to-multipoint (PTM) transmissions are allowed for the transmission of an MBMS service over the air interface. This allows the cellular network to decide whether there are enough users in the cell interested in the MBMS service to warrant the establishment and use of PTM, or whether one or more PTP channels should be used. For a single user or a few users this is likely to be less power consuming due to the possibility for user-specific retransmissions. It is also possible that the network decides that nothing should be transmitted because there is no interest in the service.

An existing approach for transmission of MBMS service, particularly in Long Term Evolution (LTE) networks, is disclosed in "Option for Uplink Messaging in LTE MBMS" by China Mobile; Vodafone, Qualcomm, ZTE and ASUSTeK (3GPP TSG RAN WG2 meeting, January 2008, p.p. 1-5). MBMS transmission is defined in different cases: when a dedicated cell is used, when both MBMS and unicast service use a common cell or if multiple cells can be used for synchronous transmission of MBMS service.

DE102006039326A1 describes a method for operation of mobile stations and base stations in a radio network, which can provide multicast service by transmitting on a PTM channel and monitor the Quality of Service (QoS) of the multicast service for a mobile station by receiving from the base station (at the mobile station) transmission power information on the PTM channel. If said transmission power reaches a limit value, to warrant the use of PTM transmission, the QoS of the multicast service is improved by increasing the transmission power on the PTM channel.

A way to reduce the power of the PTM transmission is the use of the feature called "PTM soft combining". The basic concept is that when multiple contiguous cells on the same carrier frequency are all transmitting the same multicast service in a PTM fashion, the mobile station at the cell edge can receive the data streams from multiple cells, and combine them to enable a more reliable overall reception. This approach is intended to allow a decrease of the transmitted power for the PTM channel in each of the cells in the "soft-combining" group.

In cases where the soft-combining cell group does not cover the whole network, there are border areas. In these areas, the mobile stations are not able to use soft combining, because the adjacent cells are not part of the soft combining cell group. If the power is reduced to the level required for mobile stations to receive the required Quality of Service (QoS), assuming that soft combining can be used, the mobile stations at the edge of the soft combining area may not be able to receive the MBMS service correctly, and may have a higher block error rate than required.

Therefore, it is an object of the invention to provide a solution that allows getting the power saving gains of soft combining even in the cells on the border of the soft combining cell group, whilst ensuring that the mobile stations in these cells at the border of the soft combining area still receive the MBMS service, correctly.

### SUMMARY OF THE INVENTION

Thereto, according to the invention a method according to independent claim 1, a cellular network according to claim 8, a mobile station according to independent claim 12 and a computer program according to claim 15 are provided. Favourable embodiments are defined in the dependent claims .

According to an aspect of the invention a method is provided for providing a multicast service in a cellular network which is a multi-cell MBMS network. The method comprises the steps of transmitting data of the multicast service on a point-to-multipoint channel, monitoring a Quality of Service of the multicast service for a mobile station and if the Quality of Service is determined to fall below a predetermined threshold value, improving the Quality of Service for the mobile station. The Quality of Service may be improved by transmitting the data of the multicast service to the mobile station on a point-to-point channel. Due to the power control algorithm between the Node B and the mobile station used on point-to-point channels, the multicast data will be transmitted with a high enough power to provide a sufficient Quality of Service to the mobile station. The point-to-point channel may be on the same frequency as the multipoint-to-point channel or on another frequency.

As a result, the Quality of Service of the multicast service is guaranteed in a cellular network with a soft combining cell group providing the multicast service on point-to-multipoint channels. However, the solution can also be applied in cases where the cellular network uses only point-to-multipoint channels to provide the multicast service (in such cases soft combining can be used throughout the whole network) and then decides, based on the mobile station quality reporting, to switch to point-to-point channels in order to provide the multicast service. Eventually, the system will evolve to a state where both point-to-multipoint channels and point-to-point channels are present and as a result there are soft-combining cell groups.

Alternatively, the Quality of Service may be improved by increasing the transmission power of the point-to-multipoint channel. Preferably, the increased transmission power is maintained as long as necessary to provide Quality of Service at or above the predetermined Quality of Service threshold value for all mobile stations receiving the multicast service. As soon as the increased power is no longer necessary for providing sufficient Quality of Service, the transmission power may be decreased to its normal level. This may be the case, because the mobile stations that had an insufficient Quality of Service before the power increase no longer receive the multicast service or have moved to an area with better coverage.

With the present invention the power-resource saving gains of soft-combining can be utilised in all cells of a soft combining area, independently of whether the cell is on the border thereof. Furthermore, reliable service provisioning of the multicast service will in general be improved, which means that there will be more resources available for customers requiring unicast services.

According to an embodiment of the invention, the Quality of Service of a mobile station is monitored by measuring the quality of the received data on the point-to-multipoint channel at the mobile station. The quality of service may be measured by measuring the Block Error Rate (BLER) at the mobile station. If the required BLER for a sufficient quality of service is not met, the mobile station reports to the cellular network that the Quality of Service is insufficient. The cellular network then takes the necessary steps to increase the Quality of Service for the mobile station. So, in this case the mobile station gives an explicit indication of poor quality.

Alternatively, the mobile station may report the measured BLER to the cellular network at a certain time interval. The cellular network compares the BLER with the required BLER for a sufficient Quality of Service. If the BLER is insufficient, the cellular network takes the necessary steps to increase the Quality of Service for the mobile station.

The Quality of Service may also be monitored by estimating the quality of the received data on the point-to-multipoint channel based on a value of a characteristic of at least one other signal from the cellular network received at the mobile station, for example based on the Common Pilot Channel Received Signal Code Power (CPICH RSCP) of the present cell of the mobile station. The mobile station may report the value thereof to the cellular network together with a list of nearby neighbour cells. Given that the cellular network knows which cells are part of the soft-combining group, based on this information it may estimate whether the mobile station is in conditions of good multicast service coverage, i.e. the Quality of Service is at or above a predetermined threshold value, or not. If the mobile station is in a Radio Resource Control (RRC) state in which it does not report the CPICH RSCP, the mobile station may be instructed by the cellular network to move to a RRC state in which it reports this parameter at predetermined intervals.

Preferably, the method according to the invention is implemented by means of a computer program.

According to a further aspect of the invention there is provided a multi-cell MBMS network providing a multicast service comprising:
- means for transmitting data of the multicast service on a point-to-multipoint channel; and
- means for improving a Quality of Service of the multicast service for a mobile station if the Quality of Service is determined to fall below a predetermined threshold value.

According to an embodiment of the invention the multi-cell MBMS network further comprises means for monitoring the Quality of Service of the multicast service for the mobile station.

According to a still further aspect of the invention there is provided a mobile station comprising:
- means for receiving data of a multicast service from a cellular network on a point-to-multipoint channel; and
- means for monitoring a Quality of Service of the multicast service for the mobile station.

These and other aspects of the invention will be apparent from and elucidated with reference to the embodiments described hereinafter.

### BRIEF DESCRIPTION OF THE DRAWINGS

The invention will be better understood and its numerous objects and advantages will become more apparent to those skilled in the art by reference to the following drawings, in conjunction with the accompanying specification, in which:
Figure 1 shows a cellular network according to the prior art providing MBMS-service in using PTM-channels in some cells and PTP channels in other cells.
Figure 2 shows a soft combining cell group according to the prior art.
Figure 3 shows a diagram illustrating a first embodiment of the invention.
Figure 4 shows a signalling message used in the first embodiment.
Figure 5 shows a diagram illustrating a second embodiment of the invention.
Figure 6 shows a signalling message used in the second embodiment.
Figure 7 shows a further signalling message used in the second embodiment.

Throughout the figures like reference numerals refer to like elements.

### DETAILED DESCRIPTION OF THE PRESENT INVENTION

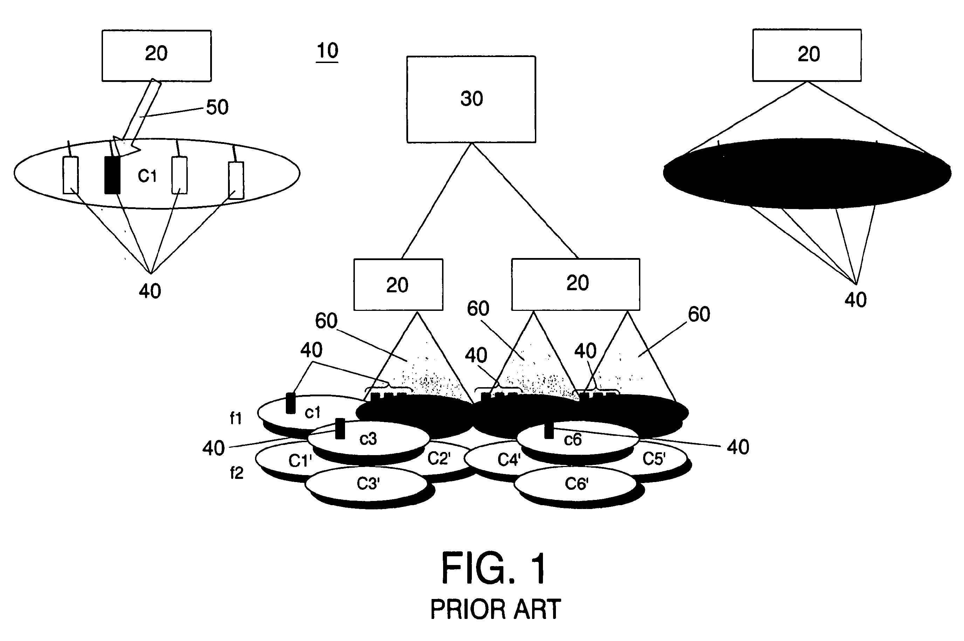

Figure 1 shows a multi-cell MBMS network 10 according to the UMTS-standard, comprising Nodes B 20 and a Radio Network Controller (RNC) 30. The cellular network provides Multimedia Broadcast & Multicast Service (MBMS) to mobile stations 40, which will be also be referred to in this description as User Equipments (UE). With the introduction of MBMS into the 3GPP UMTS Release 6 specifications, both point-to-point (PTP) and point-to-multipoint (PTM) transmissions are allowed for the transmission of an MBMS service over the air interface. So, as shown in figure 1, the cellular network may provide MBMS on frequency layer f1 using a Point-to-Point (PTP) channel 50 in cells (in the example of figure 1: c1, c3, c6) wherein only one or a few UEs receive the MBMS service and using a Point-to-Multipoint (PTM) channel 60 in other cells (in the example of figure 1: c2, c4, c5). On the frequency layer f2, all cells (c1',c2',c3',c4',c5',c6') use PTP transmission.

The power of the PTM transmission may be reduced by a feature called "PTM soft combining". The basic concept is that when multiple contiguous cells on the same carrier frequency are all transmitting the same multicast service in a PTM fashion, the mobile station at the cell edge can receive the data streams from multiple cells, and combine them to enable a more reliable overall reception. This approach is intended to allow a decrease of the transmitted power for the PTM channel in each of the cells in the "soft-combining" group.

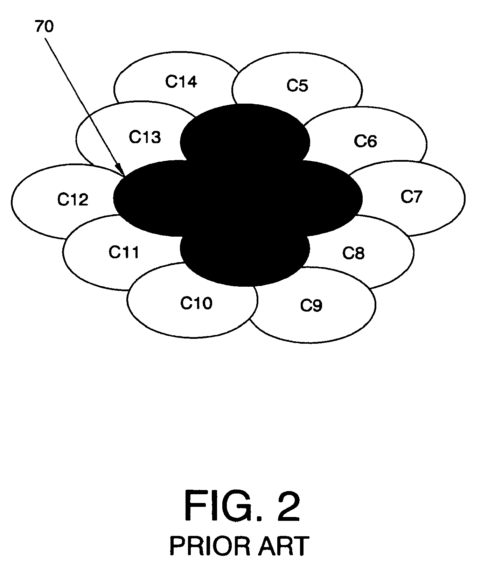

Figure 2 shows an example of this prior art feature, wherein the soft-combining cell group consists of the cells c1,c2,c3,c4, each of the cells providing the MBMS service on a PTM channel. The surrounding cells c5.... c14 provide the MBMS service on a PTP channel. So, in this example, the soft-combining cell group does not cover the whole network. As a result, there is a border 70 between the soft-combining cell group and the surrounding cells. In the areas near the border 70, the mobile stations are not able to use soft combining, because the adjacent cells are not part of the soft combining cell group. If the power is reduced to the level required for mobile stations to receive the required Quality of Service (QoS), assuming that soft combining can be used, the mobile stations at the edge of the soft combining area may not be able to receive the MBMS service correctly, and may have a higher block error rate than required.

### First embodiment

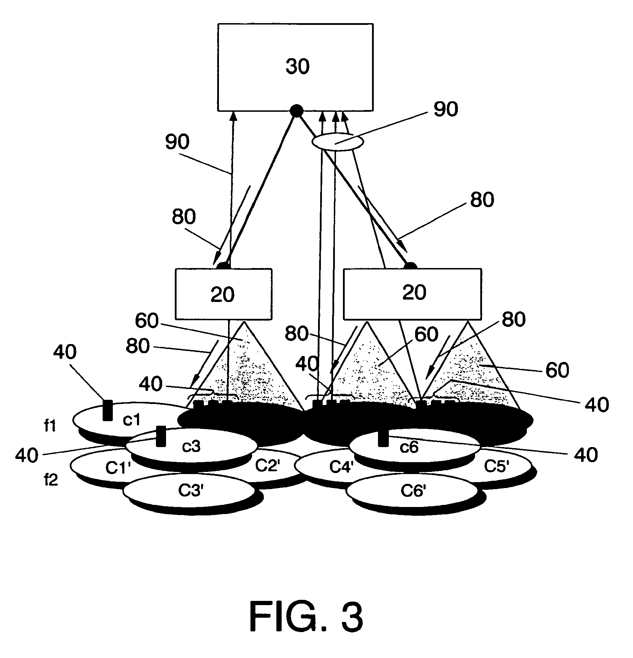

According to a first embodiment of the invention, the mobile station provides an explicit indication of poor Quality of Service to the cellular network. Each MBMS service will have a required Block Error Rate (BLER) that is needed to be met such that the application can run smoothly on the mobile terminal. A signalling procedure for putting the first embodiment in practice is shown in figure 3. On the MBMS preferred frequency layer f1, cells c2,c4,c5 use PTM for providing MBMS. The remaining cells c1,c3,c6 use PTP. On the frequency layer f2, all cells use PTP transmission. According to a first approach the mobile terminals 40 operating in PTM mode receive a signalling message 80 with the BLER target from the RNC 30. If the BLER of its received data stream is below the BLER target, a mobile terminal 40 understands that the QoS is not met. An alternative approach would be that the application layer in the mobile terminal provides an indication to lower layers in the terminal to indicate that the reception quality is not good enough. One way of implementing this approach is to make use of the Raptor code information available in the UE. The aim of Raptor codes is to recover the lost packets using encoding symbols. An unlimited number of encoding symbols could be generated until whole source symbols are recovered. In this case, the mobile can use information about the lost packets to determine that the quality is not good enough, i.e. that it is below a predetermined threshold value. According to 3GPP, the Raptor code implementation is mandatory for UEs and an optional feature in the network. Raptor codes were introduced to 3GPP Release 6.

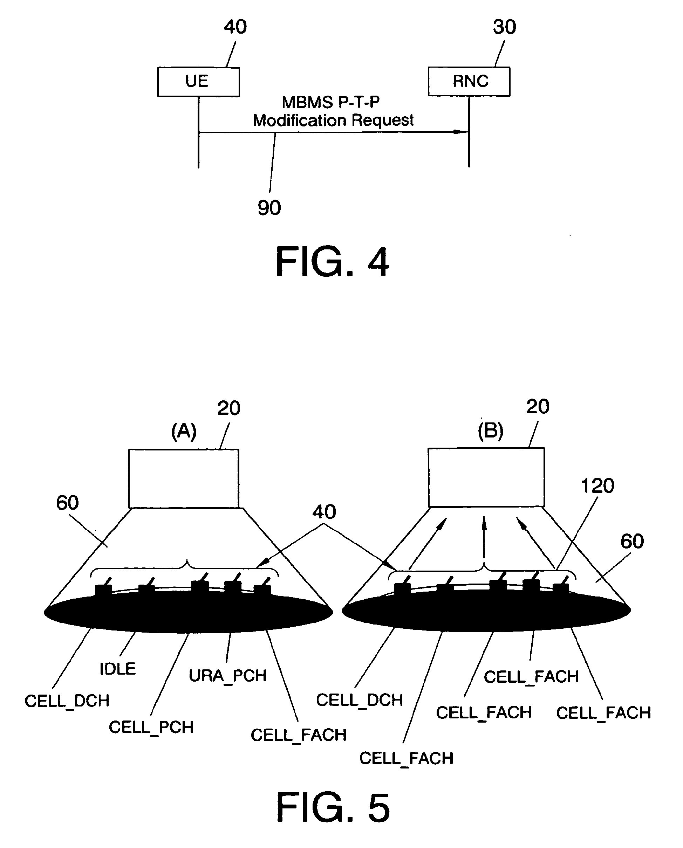

When the mobile station determines that the QoS of the MBMS is insufficient i.e. that it is below a predetermined threshold value, it transmits a signalling message 90 to the RNC reporting a "Quality Indicator" to indicate that the QoS is not met. The mobile station may be enabled to send this report by small modifications to existing RRC signalling messages specified in 3GPP RAN specifications. Alternatively, it can use the PTP Request message specified in 3GPP TS25.346, as shown in figure 4.

When the RNC receives the indication that the QoS is not being met for one of the users, it has the following options to increase the QoS for the concerned mobile station:
- Increasing the PTM channel power. The RNC may determine to use this option already if a single mobile station reports a bad QoS. However, it is preferred to use this option only if a predetermined number of mobile stations reports a bad QoS, because an increased power causes a lower signal-to-noise rate on other channels of the network on the same frequency. Therefore, it is preferred that the increased transmission power on the PTM is maintained as long as necessary to provide Quality of Service at or above the predetermined Quality of Service threshold value to all mobile stations receiving the multicast service. As soon as the increased power is no longer necessary for providing sufficient Quality of Service, the transmission power may be decreased to its normal level. This may be the case, because the mobile stations that had an insufficient Quality of Service before the power increase no longer receive the multicast service or have moved to an area with better coverage.

- giving this specific mobile station a PTP channel instead on the MBMS preferred frequency layer f1 and provide the MBMS service thereon.
- moving the mobile station to another frequency layer f2 and providing the MBMS service via a PTP channel.

### Second embodiment

According to a second embodiment of the invention, an estimation of a poor Quality of Service of a mobile station is made based on the Common Pilot Channel Received Signal Code Power (CPICH RSCP) of the present cell of the mobile station. The mobile station may report the value thereof to the cellular network together with a list of nearby neighbour cells. Given that the cellular network knows which cells are part of the soft-combining group, based on this information it may estimate whether the mobile station is in conditions of good multicast service coverage or not. In case that the estimated QoS of the mobile station is insufficient i.e. below a predetermined threshold value, the RNC may increase the QoS for the concerned mobile station according to one of the options discussed herein above.

If the mobile station is in a Radio Resource Control (RRC) state in which it does not report the CPICH RSCP, it should be instructed by the cellular network to move to a RRC state in which it does report this parameter. The RRC states wherein the mobile station reports the CPICH RSCP are the CELL_DCH state, in this state the mobile stations reports this parameter on a Dedicated Channel (DCH), and the CELL_FACH state, in this state the mobile station reports this parameter on a Random Access Channel (RACH). In the CELL_PCH state or URA_PCH state the mobile station can report this parameter by moving to CELL_FACH state with a CELL_UPDATE message. In idle state the mobile stations do not report this parameter.

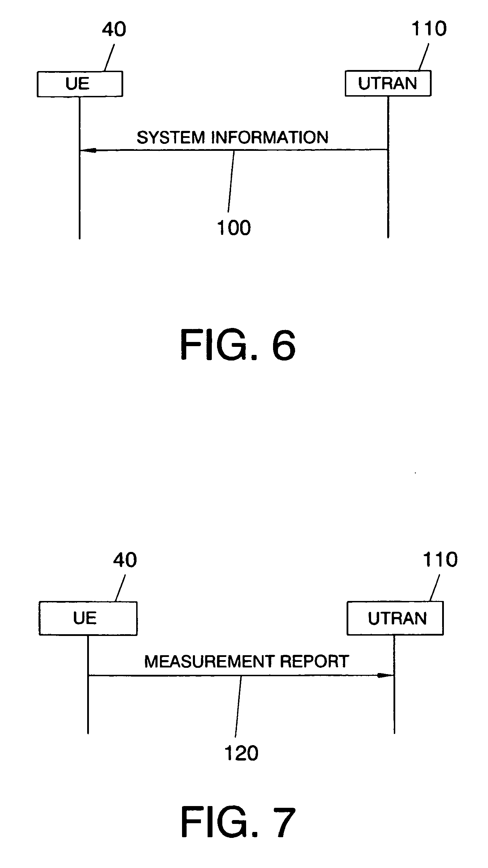

Therefore, if mobile stations that receive the MBMS service are in one of these states (IDLE, CELL_PCH or URA_PCH), the cellular network needs to instruct some or all of them (configurable parameter by SW) to move to the CELL_FACH state. Figure 5 shows the transition from an initial situation (A) wherein three mobile stations are in states (Idle, URA_PCH and CELL_PCH) wherein they do not report the CPICH RSCP to a situation (B) wherein these three mobile stations have been moved to the CELL_FACH state. The mobile stations that are in the CELL_DCH and CELL_FACH state remain in that state. Then, as shown in figure 6, by means of the system information message 100 (SIB11/12) transmitted by the UTRAN 110 on the broadcast channel (BCH), periodical traffic volume measurement is requested. By means of this periodical traffic volume measurement it is possible to have periodical RSCP measurements as well. The mobile stations periodically send the reports 120 to the cellular network, as shown in figures 5 and 7. In this way, the cellular network (RNC) also obtains measurements regarding neighbouring cells of the mobile stations.

The signalling flow shown in figure 7 is applicable for handling UEs with an activated service that requires MBMS p-t-p RB (Radio Bearer) in PMM (Packet Mobility Management) IDLE and CONNECTED mode. UEs in idle mode are required to perform RRC connection establishment for sending this information flow. UEs that are in URA_PCH or CELL_PCH state are required to make a cell update and UEs that are in CELL_DCH state transmit an MBMS MODIFICATION REQUEST message.

While the invention has been illustrated and described in detail in the drawings and foregoing description, such illustration and description are to be considered illustrative or exemplary and not restrictive; the invention is not limited to the disclosed embodiments.

The signalling message and procedures described for implementing the present invention are merely exemplary. Any other suitable signalling messages and procedures may be envisaged by a person of average skill in the art for implementing the present invention.

Furthermore, the invention may equally be applied to cellular networks working according to technologies other than UMTS, in which multicast services are implemented: including, for example, LTE (Long Term Evolution). The invention has been described for a MBMS Dual-Frequency Network but it may of course also be used in MBMS Single-Frequency Networks.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Method for providing a multicast service in a multi-cell MBMS network (10) using at least a soft combining cell group and comprising the steps of:
- transmitting data of the multicast service on a point-to-multipoint channel (60);
- monitoring a Quality of Service of the multicast service for a mobile station (40);
**characterised by** further comprising:
- using soft combining in the cells at the border of the soft combining cell group;
- if the Quality of Service for the mobile station (40) is determined to fall below a predetermined threshold value, transmitting the data of the multicast service to the mobile station (40) on a point-to-point channel (50), .

2. Method according to claim 1 wherein the point-to-point channel (50) is on a same frequency (f1) as the point-to-multipoint channel (60).

3. Method according to claim 1 wherein the point-to-point channel (50) is on another frequency (f2) than the point-to-multipoint channel (60).

4. Method according to any one of claims 1 to 3, wherein the Quality of Service is monitored by estimating the quality of the received data on the point-to-multipoint channel (60) based on a value of a characteristic of at least another signal from the network (10) received at the mobile station (40).

5. Method according to claim 4 wherein the mobile station (40) reports the value to the multi-cell MBMS network (10).

6. Method according to claim 5 wherein the multi-cell MBMS network (10) moves the mobile station (40) to a control state in which the value is periodically reported by the mobile station (40).

7. Method according to any one of claims 4 to 6 wherein the other signal is the pilot channel of a present cell of the mobile station (40).

8. A multi-cell MBMS network (10) comprising at least a soft combining cell group, means for transmitting data of a multicast service on a point-to-multipoint channel (60) and means for monitoring the Quality of Service of the multicast service for a mobile station (40), the multi-cell MBMS network (10) being **characterised by** further comprising:
- means for soft combining in the cells at the border of the soft combining cell group; and
- means for transmitting the data of the multicast service to the mobile station (40) on a point-to-point channel (50), if the Quality of Service for the mobile station (40) is determined to fall below a predetermined threshold value.

9. The multi-cell MBMS network (10) according to claim 8 wherein the point-to-point channel (50) has a frequency selected from a same frequency (f1) as the point-to-multipoint channel (60) and another frequency (f2) than the point-to-multipoint channel (60).

10. The multi-cell MBMS network (10) according to any one of claims 8 and 9, wherein the means for monitoring the Quality of Service comprise means for estimating the quality of the received data on the point-to-multipoint channel (60) based on a value of a characteristic of at least another signal from the network (10) received at the mobile station (40).

11. The multi-cell MBMS network (10) according to claim 10 wherein the multi-cell MBMS network (10) comprises means for moving the mobile station (40) to a control state in which the value is periodically reported by the mobile station.

12. Mobile station (40) comprising:
- means for receiving data of a multicast service from a multi-cell MBMS network (10) on a point-to-multipoint channel (60); means for soft combining in the cells at the border of a soft combining cell group and
- means for monitoring a Quality of Service of the multicast service for the mobile station (40);
**characterised by** further comprising:
- means for receiving data of the multicast service on a point-to-point channel (50), if the Quality of Service for the mobile station (40) is determined to fall below a predetermined threshold value.

13. Mobile station (40) according to claim 12 wherein the means for receiving data of the multicast service on the point-to-point channel (50) use a frequency selected from a same frequency (f1) as the means for receiving data of the multicast service on the point-to-multipoint channel (60) and another frequency (f2) than the means for receiving data of the multicast service on the point-to-multipoint channel (60).

14. Mobile station (40) according to any of claims 12 and 13, wherein the means for monitoring the Quality of Service of the multicast service comprise means for reporting a value of a characteristic of at least another signal from the multi-cell MBMS network (10) received at the mobile station (40)

15. A computer program comprising computer program code means adapted to perform the steps of any one of claims 1 to 7, when said program is run on a computer.

## Patentansprüche

1. Verfahren zum Bereitstellen eines Multicast-Dienstes in einem Multizellen-MBMS-Netzwerk (10) mit wenigstens einer softkombinierenden Zellengruppe, das die folgenden Schritte beinhaltet:
- Übertragen von Daten des Multicast-Dienstes auf einem Punkt-zu-Mehrpunkt-Kanal (60);
- Überwachen einer Dienstequalität des Multicast-Dienstes für eine Mobilfunkstation (40);
**dadurch gekennzeichnet, dass** es ferner Folgendes beinhaltet:
- Anwenden von Softkombination in den Zellen an den Grenzen der softkombinierenden Zellengruppe;
- wenn festgestellt wird, dass die Dienstequalität für die Mobilfunkstation (40) unter einen vorbestimmten Schwellenwert fällt, Übertragen der Daten des Multicast-Dienstes zur Mobilfunkstation (40) auf einem Punkt-zu-Punkt-Kanal (50).

2. Verfahren nach Anspruch 1, wobei der Punkt-zu-Punkt-Kanal (50) auf derselben Frequenz (f1) arbeitet wie der Punkt-zu-Mehrpunkt-Kanal (60).

3. Verfahren nach Anspruch 1, wobei der Punkt-zu-Punkt-Kanal (50) auf einer anderen Frequenz (f2) ist als der Punkt-zu-Mehrpunkt-Kanal (60).

4. Verfahren nach einem der Ansprüche 1 bis 3, wobei die Dienstequalität durch Schätzen der Qualität der empfangenen Daten auf dem Punkt-zu-Mehrpunkt-Kanal (60) auf der Basis eines Wertes einer Charakteristik von wenigstens einem anderen an der Mobilfunkstation (40) empfangenen Signal von dem Netzwerk (10) überwacht wird.

5. Verfahren nach Anspruch 4, wobei die Mobilfunkstation (40) den Wert an das Multizellen-MBMS-Netzwerk (10) meldet.

6. Verfahren nach Anspruch 5, wobei das Multizellen-MBMS-Netzwerk (10) die Mobilfunkstation (40) in einen Steuerzustand bringt, in dem der Wert periodisch von der Mobilfunkstation (40) gemeldet wird.

7. Verfahren nach einem der Ansprüche 4 bis 6, wobei das andere Signal der Pilotkanal einer anwesenden Zelle der Mobilfunkstation (40) ist.

8. Multizellen-MBMS-Netzwerk (10), das wenigstens eine softkombinierende Zellengruppe, Mittel zum Übertragen von Daten eines Multicast-Dienstes auf einem Punkt-zu-Mehrpunkt-Kanal (60) und Mittel zum Überwachen der Dienstequalität des Multicast-Dienstes für eine Mobilfunkstation (40) umfasst, wobei das Multizellen-MBMS-Netzwerk (10) **dadurch gekennzeichnet ist, dass** es ferner Folgendes umfasst:
- Mittel zum Softkombinieren in den Zellen an den Grenzen der softkombinierenden Zellengruppe; und
- Mittel zum Übertragen der Daten des Multicast-Dienstes zu der Mobilfunkstation (40) auf einem Punkt-zu-Punkt-Kanal (50), wenn festgestellt wird, dass die Dienstequalität für die Mobilfunkstation (40) unter einen vorbestimmten Schwellenwert fällt.

9. Multizellen-MBMS-Netzwerk (10) nach Anspruch 8, wobei der Punkt-zu-Punkt-Kanal (50) eine Frequenz hat, die aus einer selben Frequenz (f1) wie der Punkt-zu-Mehrpunkt-Kanal (60) und einer anderen Frequenz (f2) als der Punkt-zu-Mehrpunkt-Kanal (60) ausgewählt ist.

10. Multizellen-MBMS-Netzwerk (10) nach einem der Ansprüche 8 und 9, wobei das Mittel zum Überwachen der Dienstequalität Mittel zum Schätzen der Qualität der empfangenen Daten auf dem Punkt-zu-Mehrpunkt-Kanal (60) auf der Basis eines Wertes einer Charakteristik von wenigstens einem anderen an der Mobilfunkstation (40) empfangenen Signal von dem Netzwerk (10) umfasst.

11. Multizellen-MBMS-Netzwerk (10) nach Anspruch 10, wobei das Multizellen-MBMS-Netzwerk (10) Mittel zum Bringen der Mobilfunkstation (40) in einen Steuerzustand umfasst, in dem der Wert periodisch von der Mobilfunkstation gemeldet wird.

12. Mobilfunkstation (40), die Folgendes umfasst:
- Mittel zum Empfangen von Daten eines Multicast-Dienstes von einem Multizellen-MBMS-Netzwerk (10) auf einem Punkt-zu-Mehrpunkt-Kanal (60);
- Mittel zum Softkombinieren in den Zellen an der Grenze einer softkombinierenden Zellengruppe; und
- Mittel zum Überwachen einer Dienstequalität des Multicast-Dienstes für die Mobilfunkstation (40);
**dadurch gekennzeichnet, dass** sie ferner Folgendes umfasst:
- Mittel zum Empfangen von Daten des Multicast-Dienstes auf einem Punkt-zu-Punkt-Kanal (50), wenn festgestellt wird, dass die Dienstequalität für die Mobilfunkstation (40) unter einen vorbestimmten Schwellenwert fällt.

13. Mobilfunkstation (40) nach Anspruch 12, wobei das Mittel zum Empfangen von Daten des Multicast-Dienstes auf dem Punkt-zu-Punkt-Kanal (50) eine Frequenz benutzt, die aus einer selben Frequenz (f1) wie das Mittel zum Empfangen von Daten des Multicast-Dienstes auf dem Punkt-zu-Mehrpunkt-Kanal (60) und einer anderen Frequenz (f2) als das Mittel zum Empfangen von Daten des Multicast-Dienstes auf dem Punkt-zu-Mehrpunkt-Kanal (60) ausgewählt ist.

14. Mobilfunkstation (40) nach einem der Ansprüche 12 und 13, wobei das Mittel zum Überwachen der Dienstequalität des Multicast-Dienstes Mittel zum Melden eines Wertes einer Charakteristik von wenigstens einem anderen an der Mobilfunkstation (40) empfangenen Signal aus dem Multizellen-MBMS-Netzwerk (10) umfasst.

15. Computerprogramm, das Computerprogrammcode zum Ausführen der Schritte nach einem der Ansprüche 1 bis 7 umfasst, wenn das genannte Programm auf einem Computer abgearbeitet wird.

## Revendications

1. Procédé destiné à assurer un service de multidiffusion dans un réseau MBMS à cellules multiples (10) faisant intervenir au moins un groupe de cellules à combinaison progressive, et comprenant les étapes consistant à :
- transmettre des données du service de multidiffusion sur un canal point-multipoint (60) ;
- surveiller une qualité de service (QoS) du service de multidiffusion pour un poste mobile (40) ;
**caractérisé en ce qu'**il comprend en outre les opérations consistant à :
- utiliser la combinaison progressive dans les cellules se trouvant à la limite du groupe de cellules à combinaison progressive ;
- s'il a été déterminé que la qualité de service (QoS) pour le poste mobile (40) va descendre en dessous d'une valeur-seuil prédéterminée, transmettre les données du service de multidiffusion au poste mobile (40) sur un canal point-à-point (50).

2. Procédé selon la revendication 1, le canal point-à-point (50) se trouvant sur une fréquence (f1) identique à celle du canal point-multipoint (60).

3. Procédé selon la revendication 1, le canal point-à-point (50) se trouvant sur une autre fréquence (f2) que celle du canal point-multipoint (60).

4. Procédé selon l'une quelconque des revendications 1 à 3, la qualité de service (QoS) étant surveillée grâce à l'estimation de la qualité des données reçues sur le canal point-multipoint (60), sur la base d'une valeur d'une caractéristique d'au moins un autre signal provenant du réseau (10) reçu au niveau du poste mobile (40).

5. Procédé selon la revendication 4, le poste mobile (40) signalant la valeur au réseau MBMS à cellules multiples (10).

6. Procédé selon la revendication 5, le réseau MBMS à cellules multiples (10) mettant le poste mobile (40) en mode de commande dans lequel la valeur est périodiquement signalée par le poste mobile (40).

7. Procédé selon l'une quelconque des revendications 4 à 6, l'autre signal étant le canal pilote d'une cellule actuelle du poste mobile (40).

8. Réseau MBMS à cellules multiples (10) comprenant au moins un groupe de cellules à combinaison progressive, des moyens pour transmettre des données d'un service de multidiffusion sur un canal point-multipoint (60) et des moyens pour surveiller la qualité de service (QoS) du service de multidiffusion pour un poste mobile (40), le réseau MBMS à cellules multiples (10) étant **caractérisé par le fait qu'**il comprend en outre :
- des moyens pour assurer une combinaison progressive dans les cellules se trouvant à la limite du groupe de cellules à combinaison progressive ; et
- des moyens pour transmettre les données du service de multidiffusion au poste mobile (40) sur un canal point-à-point (50), s'il a été déterminé que la qualité de service (QoS) pour le poste mobile (40) va descendre en dessous d'une valeur-seuil prédéterminée.

9. Réseau MBMS à cellules multiples (10) selon la revendication 8, le canal point-à-point (50) ayant une fréquence sélectionnée parmi soit une fréquence (f1) identique à celle du canal point-multipoint (60), soit une autre fréquence (f2) que celle du canal point-multipoint (60).

10. Réseau MBMS à cellules multiples (10) selon l'une quelconque des revendications 8 et 9, les moyens pour surveiller la qualité de service (QoS) comprenant des moyens pour estimer la qualité des données reçues sur le canal point-multipoint (60), sur la base d'une valeur d'une caractéristique d'au moins un autre signal provenant du réseau (10) reçu au niveau du poste mobile (40).

11. Réseau MBMS à cellules multiples (10) selon la revendication 10, le réseau MBMS à cellules multiples (10) comportant des moyens pour mettre le poste mobile (40) en mode de commande dans lequel la valeur est périodiquement signalée par le poste mobile.

12. Poste mobile (40) comprenant:
- des moyens pour recevoir des données d'un service de multidiffusion provenant d'un réseau MBMS à cellules multiples (10) sur un canal point-multipoint (60) ;
- des moyens pour assurer une combinaison progressive dans les cellules se trouvant à la limite d'un groupe de cellules à combinaison progressive ; et
- des moyens pour surveiller une qualité de service (QoS) du service de multidiffusion pour le poste mobile (40) ;
**caractérisé par le fait qu'**il comprend en outre :
- des moyens pour recevoir des données du service de multidiffusion sur un canal point-à-point (50), s'il a été déterminé que la qualité de service (QoS) pour le poste mobile (40) va descendre en dessous d'une valeur-seuil prédéterminée.

13. Poste mobile (40) selon la revendication 12, les moyens pour recevoir des données du service de multidiffusion sur le canal point-à-point (50) utilisant une fréquence sélectionnée parmi soit une fréquence (f1) identique à celle des moyens pour recevoir des données du service de multidiffusion sur le canal point-multipoint (60), soit une autre fréquence (f2) que celle des moyens pour recevoir des données du service de multidiffusion sur le canal point-multipoint (60).

14. Poste mobile (40) selon l'une quelconque des revendications 12 et 13, les moyens pour surveiller la qualité de service (QoS) du service de multidiffusion comprenant des moyens pour signaler une valeur d'une caractéristique d'au moins un autre signal provenant du réseau MBMS à cellules multiples (10) reçu au niveau du poste mobile (40).

15. Programme informatique comprenant des moyens à code-programme d'ordinateur conçus pour réaliser les étapes de l'une quelconque des revendications 1 à 7 lorsque ledit programme est exécuté sur un ordinateur.
